# EUROPEAN PATENT APPLICATION

(11) **EP 4 589 186 A2**
(43) Date of publication of application: **23.07.2025**
(21) Application number: 25150706.7
(22) Date of filing: 08.01.2025
(51) Int. Cl.: F16L 37/14

(54) **PIPE FITTING**

(30) Priority: 19.01.2024 CA 3226895; 19.01.2024 US 202418417313
(71) Applicant: Ipex Technologies Inc., Oakville, Ontaro L6H 1A7 (CA)
(72) Inventor: Vadgama, Triya Nanalal, Amherstburg, ON, N9V 0G9 (CA); Leung, Martin Kwan Yu, Oakville, ON, L6M 4V8 (CA); Martino, Filippo, Oakville, ON, L6H 7V7 (CA)
(74) Representative: Grünecker Patent- und Rechtsanwälte PartG mbB

(57) **Abstract**

A pipe fitting comprising a coupling body (10) having two or more open ends (44, 46) and a locking spline (100, 200) for engagement of a pipe to the open end, the coupling body (10) comprising a sidewall (42) defining an internal bore (48) sized for receiving at least a portion of the pipe, a first spline receiving groove inwardly open to receive at least a portion of the locking spline (100, 200), and an aperture in communication with the first spline receiving groove, wherein the first spline receiving groove is located proximal to the open end for opposed alignment with a second spline receiving groove defined by the pipe when the pipe is received in the internal bore (48) in an engaged position, whereby the first and second spline receiving grooves cooperatively define a spline receiving channel, and the aperture is sized for receiving the locking spline (100, 200) therethrough to locate the locking spline (100, 200) in the spline receiving channel, thereby engaging the pipe to the open end.

## Description

### SCOPE OF THE INVENTION

The present invention relates to a pipe fitting for fluidically coupling two or more pipes, and which most preferably includes a locking spline or a radially expandable retainer ring for effecting mechanical engagement between the pipe fitting and the pipes.

### BACKGROUND OF THE INVENTION

A pipe fitting or adapter may be used in a piping or plumbing system, such as a drain-waste-vent (DWV) system, in order to manipulate or regulate fluid flow in the system in the conveyance of, for example, water, gas and/or liquid waste in a domestic or commercial setting. For instance, a DWV system utilize in a domestic setting may typically include a number of straight sections of plastic pipes formed mainly with polyvinyl chloride (PVC), chlorinated polyvinyl chloride (CPVC) and/or acrylonitrile butadiene styrene (ABS), and which are of differing orientations, locations, sizes and/or shapes. A pipe coupling may be used to fluidically couple multiple sections of plastic pipes as part of the DWV system, to for example, convey water from the water main to be supplied to a bathroom.

Various pipe fittings are commercially available to permit different required manipulation or regulation of fluid flow, including an elbow, a coupling, a reducer, a tee, a wye and a tee-wye. For instance, pipe couplings are commercially available to simply connect two pipes of the same or different sizes, by providing a straight coupling body fluidically coupling the two pipes. As a further example, an elbow or a sweep elbow may be utilized to redirect fluid flow from a vertically oriented plastic pipe to a horizontally oriented plastic pipe, by providing a fitting body curved at 90° fluidically coupled to both the vertically oriented and horizontally plastic pipes.

To fluidically couple or join the pipes with a pipe fitting, various connection techniques are available, such as threaded connection, solvent welding and others, often dependent on the pipe material. For instance, with a DWV system typically utilizing plastic pipes, pipe-to-pipe and pipe-to-fitting connections may be established with use of a solvent cement, an adhesive, fusion or other bonding techniques to achieve a relatively permanent connection. To implement a less permanent and removable connection, various techniques that are more mechanical in nature have been proposed.

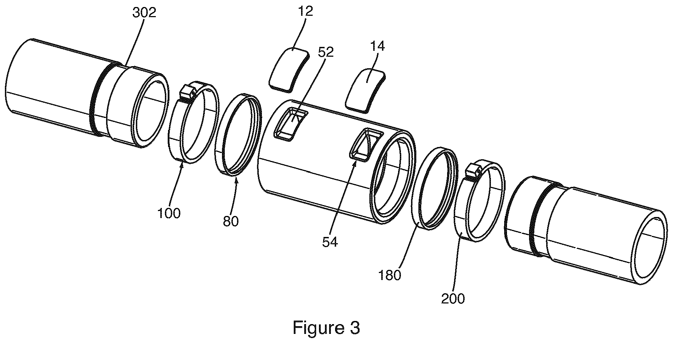

For instance, International Publication No. WO 2009/108963 to Van Wyk describes a pipe coupling body 10 for receiving a pipe 12, and a gripping member 20 for holding the pipe 12 in the bod 10. The gripping member is formed with a sleeve 32 and a grip ring 30 located at an axial end of the sleeve 32, where the ring 30 has teeth 34 extending radially inwardly at an angle in the direction of pipe insertion. For securing the grip member 20 over an opening of the body 10, the body 10 has radial ridges 24, and the sleeve 32 defines keyhole slots 36 sized to receive the ridges 24 therein. Figure 3 shows an alternative embodiment of the gripping member 20 having the grip ring 30 and not the sleeve 32, and which rather includes multiple feet 46 extending from a periphery of the ring 30. Each foot 46 has an inwardly oriented projection for engaging a distal sidewall of the ridge 24, and thus, locking the member 20 to the body 10.

U.S. Patent No. 10,047,884 to Taylor describes a push connector 100 having a housing body 102, sealing members 104, a locking member 106 and a retaining member 108. The body 102 has threaded portions 134, 136 near axial ends of the body 102, and defines an axial bore 110 to receive the sealing member 104 and the locking member 106. The member 106 includes an annular ring 142 and locking teeth 146 operable as a one-way stop for a tube to be received in the bore 110, and the ring 142 is sized to be positioned on a top abutment 154 near the axial end of the body 102. To retain the member 104, 106 in the axial bore 110, the retaining member 108 has an internally threaded portion 150 for threaded engagement with the threaded portion 134 of the body 102, and the tube can be inserted into the bore 110 to be retained therein by the locking member 106. To remove the tube, the retaining member 108 may be removed from the body 102, and the connector 100 can optionally include a release mechanism for disengaging the teeth 146 from the pipe.

U.S. Patent No. 7,195,287 to Wai describes a fitting for coupling a pipe to a pipe joint 6 having internal threads near a joint opening. The fitting is provided with a combination of outer and inner rings 1,2, an internal teethed lock ring 3, a locking sleeve 4 and an elastic sealing ring 5. The ring 5 is shaped for sealingly abutting an end of the pipe when placed in the joint 6, and the locating sleeve 4 is for positioning between the sealing ring 5 and the lock ring 3, and the inner ring 2 engages the lock ring 3 opposite the sleeve 4. The inner ring 2 has an axial end face tapering towards the lock ring 3, and which is configured to urge the internal teeth of the lock ring 3 radially outwardly when pressed against the teeth. The inner ring 2 has outer threads for complementary engagement with internal threads of the outer ring 1, and the outer ring 1 has outer threads for complementary engagement with the internal threads of the joint 6. After components 1 to 5 are placed into the pipe joint 6 with the outer threads o f the outer ring 1 engaging the internal threads of the pipe joint 6, the ring 1 can be integrated to the joint 6 by for example using glue to prevent the ring 1 from being removed from the joint 6. The pip can then be inserted into the joint 6 through the components 1 to 5, with the internal teeth of the lock ring 3 engaging an outer surface of the pipe. The pipe can be removed form the joint 6 by threaded rotation, and thus longitudinal movement, of the inner ring 2 relative to the outer ring 3, such that the ring 2 presses against the lock ring 3 to release the internal teeth from the pipe.

### SUMMARY OF THE INVENTION

One possible non-limiting object of the present invention to provide a pipe fitting which may permit more ready or convenient fluid connection between two or more fluid pipes, such as a plastic pipe or a PVC, CPVC or ABS pipe for use in a DWV system.

Another possible non-limiting object of the present invention is to provide a pipe fitting which may permit a fluid connection between two or more fluid pipes that is more mechanical in nature, and without necessary requiring use of a solvent cement, adhesive fusion or other similar or permanent connection techniques.

Another possible non-limiting object of the present invention is to provide a pipe fitting which may permit more ready disconnection between connected fluid pipes without necessarily requiring complex tools or procedures, and which, at the same time, may allow for reconnecting the fluid pipes in varying environmental conditions.

In one aspect, the present invention provides a pipe fitting comprising a coupling body having two or more open ends and a locking spline for engagement of a pipe to the open end, the coupling body comprising a sidewall defining an internal bore sized for receiving at least a portion of the pipe, a first spline receiving groove inwardly open to receive at least a portion of the locking spline, and an aperture in communication with the first spline receiving groove, wherein the first spline receiving groove is located proximal to the open end for opposed alignment with a second spline receiving groove defined by the pipe when the pipe is received in the internal bore in an engaged position, whereby the first and second spline receiving grooves cooperatively define a spline receiving channel, and the aperture is sized for receiving the locking spline therethrough to locate the locking spline in the spline receiving channel, thereby engaging the pipe to the open end.

In one embodiment, a depth of the first spline receiving groove is substantially equal to a depth of the second spline receiving groove. In one embodiment, a depth of the first spline receiving groove is less than a depth of the second spline receiving groove. In one embodiment, a depth of the first spline receiving groove is greater than a depth of the second spline receiving groove.

In one embodiment, the locking spline has a cross section provided with a length at least two times greater than a width, wherein in the engaged position, the length is oriented along a longitudinal axis of the pipe.

In one embodiment, the length is about three times greater than the width.

In one embodiment, the cross section is a rectangular cross section, and the length is less than a width of the spline receiving channel.

In one embodiment, the locking spline comprises a curved section extending at least partially along a length thereof, the curved section being shaped to substantially conform to a curvature of the spline receiving channel.

In one embodiment, the locking spline defines first and second outwardly open spline grooves along a length thereof, and the coupling body comprises first and second ribs extending inwardly from the sidewall in the first spline receiving groove, the first and second ribs being located to be received respectively by the first and second spline grooves in the engaged position.

In one embodiment, in the engaged position, the locking spline contacts the first and second ribs substantially without contacting the sidewall.

In one embodiment, the coupling body further comprises a stop flange extending inwardly from the sidewall for abutting contact with a longitudinal end of the pipe in the engaged position, the sidewall further defining a gasket receiving groove interposed between the first spline receiving groove and the stop flange, wherein the pipe fitting further comprises a resiliently deformable gasket shaped to be received in the gasket receiving groove in fluid sealing contact with the pipe. In one embodiment, the gasket is an elastomeric gasket having a ring shape dimensioned to operate as a mechanical seal between the pipe and the coupling body to prevent outward fluid movement therefrom.

In one embodiment, the locking spline comprises a pair of opposed terminal ends shaped for removable complementary interlocking engagement therebetween in the engaged position.

In one embodiment, one said terminal end comprises a removal tab sized to extend outwardly into or through the aperture, the removal tab being configured to facilitate removal of the locking spline in disengagement of the pipe from the coupling body.

In one embodiment, the pipe fitting further comprises an aperture cover sized for seated sealing engagement over the aperture and prevent entry of dust or water into the spline receiving channel.

In one embodiment, the pipe comprises a chamfered insertion end shaped for reducing frictional resistance between the pipe and the coupling body during insertion of the pipe into the internal bore.

In another aspect, the present invention provides a pipe fitting comprising a coupling body having two or more open ends and a radially expandable retainer ring for engagement of a pipe to the open end, the retainer ring being resiliently biased towards an unexpanded state, and the coupling body comprising a sidewall defining an internal bore sized for receiving at least a portion of the pipe, and a first ring receiving groove inwardly open to receive at least a portion of the retainer ring, wherein the first ring receiving groove is located proximal to the open end for opposed alignment with a second ring receiving groove defined by the pipe when the pipe is received in the internal bore in an engaged position, whereby the first and second ring receiving grooves cooperatively define a ring receiving channel, and the retainer ring is selected to radially expand outwardly into the first ring receiving groove with insertion of the pipe therethrough and return to the unexpanded state when the first and second ring receiving grooves are in the opposed alignment to locate the retainer ring in the ring receiving channel, thereby engaging the pipe to the open end.

In one embodiment, the pipe fitting further comprises a filler ring, wherein the first ring receiving groove is sized to receive the retainer ring and the filler ring, the filler ring being for placement in the first ring receiving groove distal to a longitudinal end of the pipe in the engaged position relative to the retainer ring, and the second ring receiving groove being narrower in width than the first ring receiving groove, whereby the second ring receiving groove and a longitudinal section of the first ring receiving groove located for receiving the retainer ring cooperatively define the ring receiving channel.

In one embodiment, the filler ring comprises a resiliently deformable filler ring formed with a plurality of filler ring arc sections.

In one embodiment, the plurality of filler ring arc sections comprises a pair of substantially semicircular filler ring arc sections.

In one embodiment, the pipe comprises a chamfered insertion end shaped for reducing frictional resistance between the pipe and the coupling body during insertion of the pipe into the internal bore.

In one embodiment, the pipe fitting comprises two said retainer rings, each said retainer ring comprising a split ring or a metal split ring defining a gap along a circumference thereof, wherein in the engaged position, said two retainer rings are for placement in the ring receiving channel with the respective gaps offset from each other along a longitudinal axis of the pipe.

In one embodiment, the coupling body further defines a gasket receiving groove interposed between the first ring receiving groove and a longitudinal end of the pipe in the engaged position, the pipe fitting further comprising a resiliently deformable gasket shaped to be received in the gasket receiving groove in fluid sealing contact with the pipe. In one embodiment, the gasket is an elastomeric gasket having a ring shape dimensioned to operate as a mechanical seal between the pipe and the coupling body to prevent outward fluid movement therefrom.

In one embodiment, the coupling body defines two said gasket receiving grooves, and the pipe fitting comprises two said gaskets to be received in the respective gasket receiving grooves, wherein the gaskets comprise O-rings.

In one embodiment, the pipe is a plastic pipe preferably prepared with polyvinyl chloride, chlorinated polyvinyl chloride or acrylonitrile butadiene styrene.

It is to be appreciated that the pipe fitting may include or permit incorporation as part of an elbow, a sweep elbow, a coupling, a reducer, a tee, a cross, a wye or a combination thereof. It is to be also appreciated that the specific dimensions, shape and materials of the pipe, pipe fitting and pipe fitting assembly are not particularly limited.

In aspect (1), there is provided a pipe fitting comprising a coupling body having two or more open ends and a locking spline for engagement of a pipe to the open end, the coupling body comprising a sidewall defining an internal bore sized for receiving at least a portion of the pipe, a first spline receiving groove inwardly open to receive at least a portion of the locking spline, and an aperture in communication with the first spline receiving groove, wherein the first spline receiving groove is located proximal to the open end for opposed alignment with a second spline receiving groove defined by the pipe when the pipe is received in the internal bore in an engaged position, whereby the first and second spline receiving grooves cooperatively define a spline receiving channel, and the aperture is sized for receiving the locking spline therethrough to locate the locking spline in the spline receiving channel, thereby engaging the pipe to the open end.

In Aspect (2), there is provided a pipe fitting comprising a coupling body having two or more open ends and a radially expandable retainer ring for engagement of a pipe to the open end, the retainer ring being resiliently biased towards an unexpanded state, and the coupling body comprising a sidewall defining an internal bore sized for receiving at least a portion of the pipe, and a first ring receiving groove inwardly open to receive at least a portion of the retainer ring, wherein the first ring receiving groove is located proximal to the open end for opposed alignment with a second ring receiving groove defined by the pipe when the pipe is received in the internal bore in an engaged position, whereby the first and second ring receiving grooves cooperatively define a ring receiving channel, and the retainer ring is selected to radially expand outwardly into the first ring receiving groove with insertion of the pipe therethrough and return to the unexpanded state when the first and second ring receiving grooves are in the opposed alignment to locate the retainer ring in the ring receiving channel, thereby engaging the pipe to the open end.

In aspect (3), there is provided a pipe fitting according to one or more of aspects (1), (2) and (4) to (20) in any combination, wherein the locking spline has a cross section provided with a length at least two times greater than a width, wherein in the engaged position, the length is oriented along a longitudinal axis of the pipe.

In aspect (4), there is provided a pipe fitting according to one or more of aspects (1) to (3) and (5) to (20) in any combination, wherein the length is about three times greater than the width.

In aspect (5), there is provided a pipe fitting or a pipe fitting assembly according to one or more of aspects (1) to (4) and (6) to (20) in any combination, wherein the cross section is a rectangular cross section, and the length is less than a width of the spline receiving channel.

In aspect (6), there is provided a pipe fitting or a pipe fitting assembly according to one or more of aspects (1) to (5) and (7) to (20) in any combination, wherein the locking spline comprises a curved section extending at least partially along a length thereof, the curved section being shaped to substantially conform to a curvature of the spline receiving channel.

In aspect (7), there is provided a pipe fitting or a pipe fitting assembly according to one or more of aspects (1) to (6) and (8) to (20) in any combination, wherein the locking spline defines first and second outwardly open spline grooves along a length thereof, and the coupling body comprises first and second ribs extending inwardly from the sidewall in the first spline receiving groove, the first and second ribs being located to be received respectively by the first and second spline grooves in the engaged position.

In aspect (8), there is provided a pipe fitting or a pipe fitting assembly according to one or more of aspects (1) to (7) and (9) to (20) in any combination, wherein in the engaged position, the locking spline contacts the first and second ribs substantially without contacting the sidewall.

In aspect (9), there is provided a pipe fitting or a pipe fitting assembly according to one or more of aspects (1) to (8) and (10) to (20) in any combination, wherein the coupling body further comprises a stop flange extending inwardly from the sidewall for abutting contact with a longitudinal end of the pipe in the engaged position, the sidewall further defining a gasket receiving groove interposed between the first spline receiving groove and the stop flange, wherein the pipe fitting further comprises a resiliently deformable gasket shaped to be received in the gasket receiving groove in fluid sealing contact with the pipe.

In aspect (10), there is provided a pipe fitting or a pipe fitting assembly according to one or more of aspects (1) to (9) and (11) to (20) in any combination, wherein the locking spline comprises a pair of opposed terminal ends shaped for removable complementary interlocking engagement therebetween in the engaged position.

In aspect (11), there is provided a pipe fitting or a pipe fitting assembly according to one or more of aspects (1) to (10) and (12) to (20) in any combination, wherein one said terminal end comprises a removal tab sized to extend outwardly into or through the aperture, the removal tab being configured to facilitate removal of the locking spline in disengagement of the pipe from the coupling body.

In aspect (12), there is provided a pipe fitting or a pipe fitting assembly according to one or more of aspects (1) to (11) and (13) to (20) in any combination, further comprising an aperture cover sized for seated sealing engagement over the aperture and prevent entry of dust or water into the spline receiving channel.

In aspect (13), there is provided a pipe fitting or a pipe fitting assembly according to one or more of aspects (1) to (12) and (14) to (20) in any combination, wherein the pipe comprises a chamfered insertion end shaped for reducing frictional resistance between the pipe and the coupling body during insertion of the pipe into the internal bore.

In aspect (14), there is provided a pipe fitting or a pipe fitting assembly according to one or more of aspects (1) to (13) and (15) to (20) in any combination, further comprising a filler ring, wherein the first ring receiving groove is sized to receive the retainer ring and the filler ring, the filler ring being for placement in the first ring receiving groove distal to a longitudinal end of the pipe in the engaged position relative to the retainer ring, and the second ring receiving groove being narrower in width than the first ring receiving groove, whereby the second ring receiving groove and a longitudinal section of the first ring receiving groove located for receiving the retainer ring cooperatively define the ring receiving channel.

In aspect (15), there is provided a pipe fitting or a pipe fitting assembly according to one or more of aspects (1) to (14) and (16) to (20) in any combination, wherein the filler ring comprises a resiliently deformable filler ring formed with a plurality of filler ring arc sections.

In aspect (16), there is provided a pipe fitting or a pipe fitting assembly according to one or more of aspects (1) to (15) and (17) to (20) in any combination, wherein the plurality of filler ring arc sections comprises a pair of substantially semicircular filler ring arc sections.

In aspect (17), there is provided a pipe fitting or a pipe fitting assembly according to one or more of aspects (1) to (16) and (18) to (20) in any combination, wherein the pipe comprises a chamfered insertion end shaped for reducing frictional resistance between the pipe and the coupling body during insertion of the pipe into the internal bore.

In aspect (18), there is provided a pipe fitting or a pipe fitting assembly according to one or more of aspects (1) to (17), (19) and (20) in any combination, wherein the pipe fitting comprises two said retainer rings, each said retainer ring comprising a split ring or a metal split ring defining a gap along a circumference thereof, wherein in the engaged position, said two retainer rings are for placement in the ring receiving channel with the respective gaps offset from each other along a longitudinal axis of the pipe.

In aspect (19), there is provided a pipe fitting or a pipe fitting assembly according to one or more of aspects (1) to (18) and (20) in any combination, wherein the coupling body further defines a gasket receiving groove interposed between the first ring receiving groove and a longitudinal end of the pipe in the engaged position, the pipe fitting further comprising a resiliently deformable gasket shaped to be received in the gasket receiving groove in fluid sealing contact with the pipe.

In aspect (20), there is provided a pipe fitting or a pipe fitting assembly according to one or more of aspects (1) to (19) in any combination, wherein the coupling body defines two said gasket receiving grooves, and the pipe fitting comprises two said gaskets to be received in the respective gasket receiving grooves, wherein the gaskets comprise O-rings.

Additional and alternative features of the present invention will be apparent to a person skilled in the art from the following detailed description of the preferred embodiments thereof.

### BRIEF DESCRIPTION OF THE DRAWINGS

Reference may now be had to the following detailed description taken together with the accompanying drawings in which:
Figure 1 is a cross-sectional perspective view of a pipe coupling in accordance with a preferred embodiment of the present invention, and which is seen with a pipe received therein;
Figure 2 is a partial lateral cross-sectional view of the pipe coupling shown in Figure 1;
Figure 3 is an exploded perspective view of the pipe coupling shown in Figure 1;
Figure 4 is a perspective view of a pipe locking spline included with the pipe coupling shown in Figure 1 with the pipe received therethrough;
Figure 5 is a perspective view of the pipe coupling shown in Figure 1 with the pipe omitted for more clear illustration of installation with the included gasket and pipe locking spline;
Figure 6 is a perspective view of a pipe locking spline included with the pipe coupling shown in Figure 1;
Figure 7 is a perspective view of a pipe locking spline included with a pipe coupling shown in an alternative embodiment of the present invention;
Figure 8 is a cross-sectional view of the locking spline shown in Figure 7;
Figure 9 is a partial cross-sectional view of a pipe coupling including the locking spline shown in Figure 7;
Figure 10 is another partial cross-sectional view of the pipe coupling shown in Figure 9;
Figure 11 is a perspective view of the pipe coupling shown in Figure 1 with a pair of aperture covers;
Figure 12 is another perspective view of the aperture covers shown in Figure 11;
Figure 13 is a perspective view of the pipe locking spline in a resting position in accordance with a preferred embodiment of the present invention;
Figure 14 is a perspective view of the pipe locking spline shown in Figure 13, and with the terminal ends thereof in an interlocking arrangement;
Figure 15 is a perspective view of the pipe locking spline in another resting position in accordance with a preferred embodiment of the present invention;
Figure 16 is a perspective view of the pipe locking spline in another resting position in accordance with a preferred embodiment of the present invention;
Figure 17 is a cross-sectional perspective view of a pipe coupling in accordance with another preferred embodiment of the present invention, and which is seen with a pipe received therein;
Figure 18 is a partial lateral cross-sectional view of the pipe coupling shown in Figure 17;
Figure 19 is an exploded perspective view of the pipe coupling shown in Figure 17; and
Figure 20 is a perspective view of a filler ring included with the pipe coupling shown in Figure 17.

### DETAILED DESCRIPTION OF THE PREFERRED EMBODIMENTS

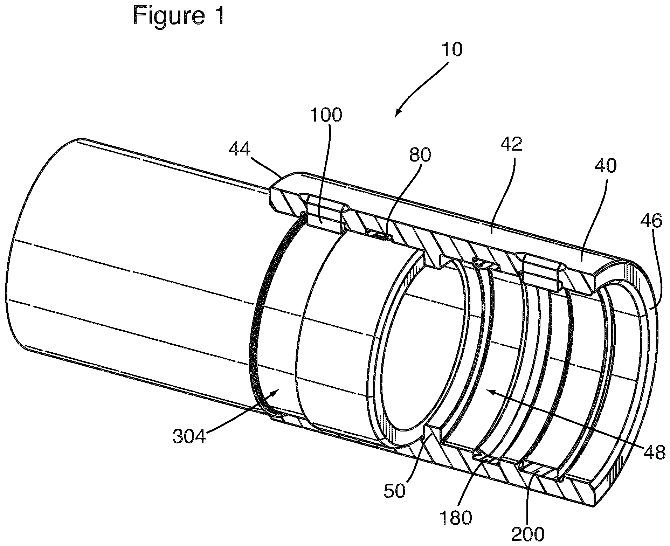

Reference is made to Figure 1 which shows a perspective view of a pipe coupling 10 for fluidically connecting two PVC, CPVC or ABS pipes, in accordance with a preferred embodiment of the present invention. In the construction shown, and as will be further described below, the pipe coupling 10 includes an elongate body or sleeve 40, elastomeric gaskets 80, 180 and pipe locking splines 100, 200.

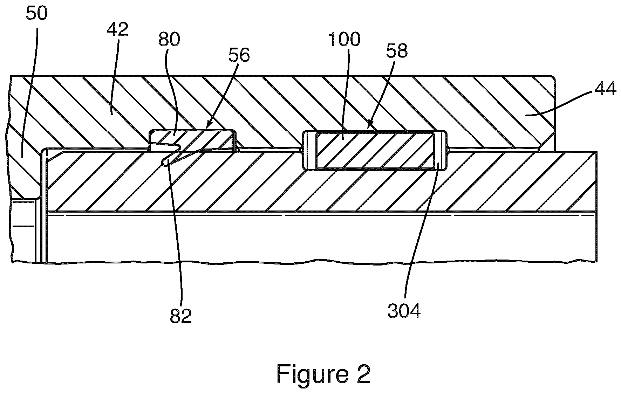

As seen in Figures 1 and 2, the sleeve 40 has a generally cylindrical shape formed with a sidewall 42 having opposed first and second axial ends 44, 46 and defining an internal bore 48 therebetween. The sleeve 40 also includes a stop flange 50 extending inwardly from the sidewall 42 between the ends 44, 46. As seen in Figure 3, the sidewall 42 also defines a rectangular aperture 52 extending through a thickness of the sidewall 42 proximate the first axial end 44. The sidewall 42 further defines proximate the second axial end 46 a rectangular aperture 54 substantially identical to the aperture 52, with the exception that the aperture 52 is proximate the other axial end 44.

As seen from Figures 1 and 3, the sleeve 40 from the stop flange 50 towards the first axial end 44 forms a mirror image from the flange 50 towards the second axial end 46. Furthermore, the gasket 80 and the spline 100 are identical to the gasket 180 and the spline 200, with a difference therebetween being that the gasket 80 and the spline 100 are for engagement with the first axial end 44, and the gasket 180 and the spline 200 the second axial end 46. For a simpler and clearer understanding of the pipe coupling 10, the first axial end 44 and the gasket 80 and the spline 100 for engagement thereto only will be described.

As seen in Figure 2, the sidewall 42 defines between the stop flange 50 and the first axial end 44 two main portions, or namely, a gasket receiving groove 56 and a first spline receiving groove 58, in the order of increasing proximity towards the first axial end 44.

As seen in Figure 2, the gasket 80 has a generally ring-like shape and includes an inner annular seal 82 angled inwardly to deformably abut against an outer surface of the pipe when received in the sleeve 40, as will be further described below. Furthermore, an outer surface of the gasket 80 is dimensioned to be received in the gasket receiving groove 56.

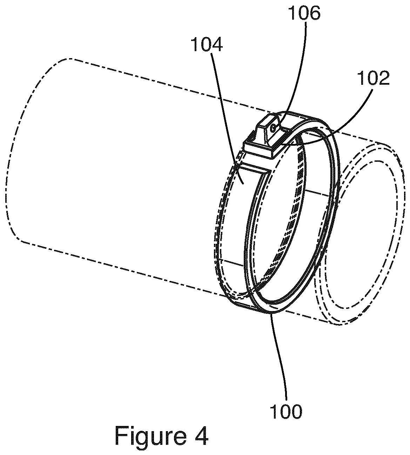

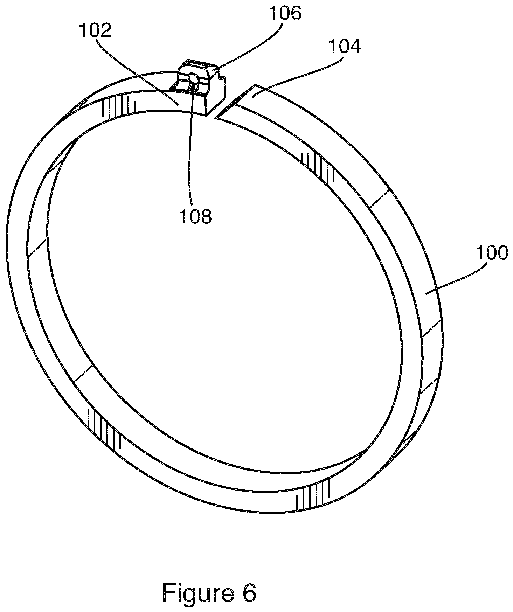

As seen in Figures 2, 4 and 6, the pipe locking spline 100 is formed with a flexible elongate material having a generally rectangular cross section. The spline 100 is provided with a pair of opposed terminal ends 102, 104 and a removal tab 106 extending substantially normal to a length of the spline 100 from the terminal end 102. The removal tab 106 is sized to locate in the aperture 52 when the pipe coupling 10 is fully assembled with the pipe engaged thereto, as will be further described below. The removal tab 106 defines a hole 108 for receiving a tool therethrough in facilitating disengagement of the pipe from the pipe coupling 10, as will be further described below.

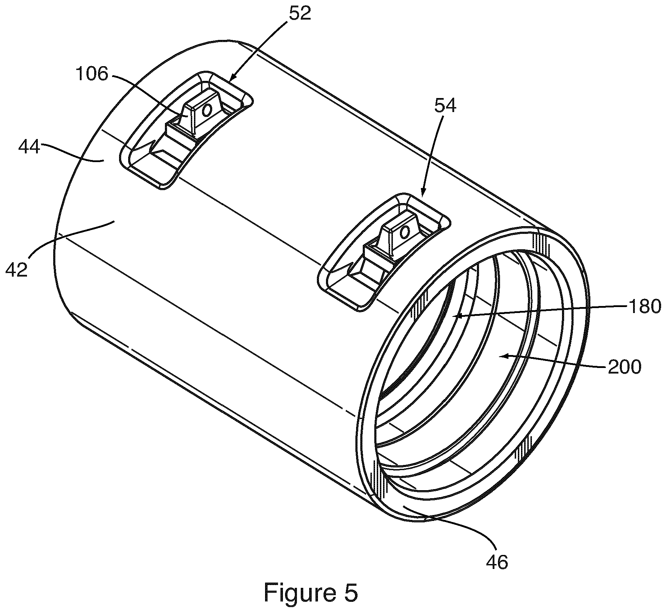

For installation, the gasket 80 is inserted into the sleeve sidewall 42 to be received in the gasket receiving groove 56, such that the inner annular seal 82 angled towards the stop flange 50. The pipe is then inserted into the internal bore 48 in fluid sealing contact with the gasket 80 with the annular seal 82 deformably pressed against an outer surface of the pipe, and where, as seen in Figure 3, the pipe defines an outwardly open second spline receiving groove 302. As better seen in Figures 1 and 2, the second spline receiving groove 302 is located for opposed alignment with the first spline receiving groove 58 when the pipe is received in the sleeve 40 with a longitudinal end thereof in abutting contact with the stop flange 50, whereby the first and second grooves 58, 302 cooperatively define a spline receiving channel 304. To engage the longitudinal end of the pipe to the sleeve 40, the locking spline 100 is inserted through the aperture 52 from the terminal end 104, until the spline 100 is received in the spline receiving channel 304 and the removal tab 106 extends into the aperture 52, as better seen in Figure 5. With the locking spline 100 received in the channel 304, thereby extending into both the sleeve 40 and the pipe, the pipe is engaged by the sleeve 40 at the first axial end 44.

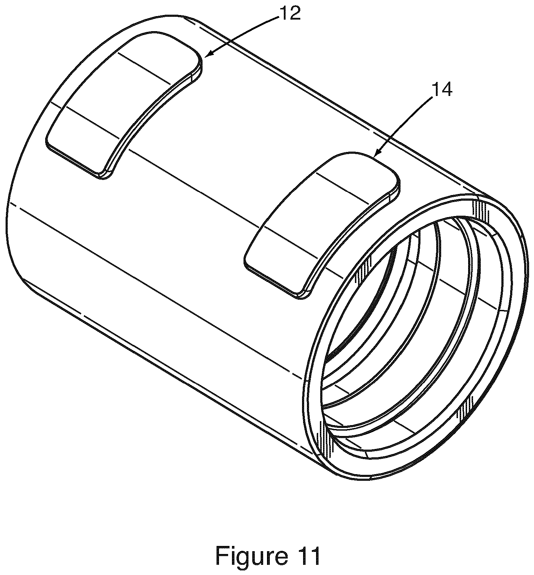

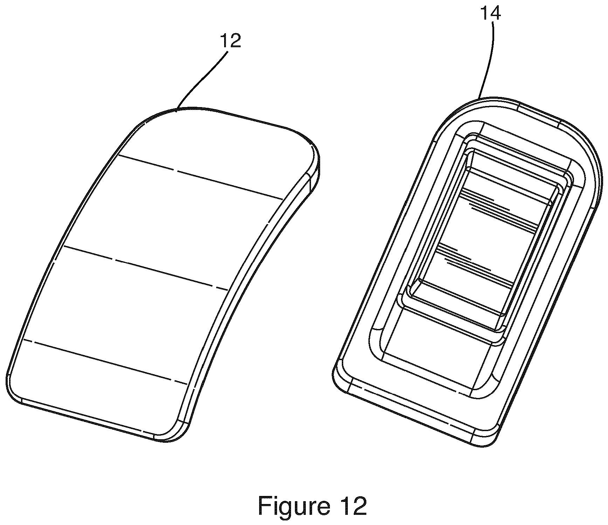

As noted above, the gasket 180 and the locking spline 200 are identical respectively to the gasket 80 and the locking spline 100. The gasket 180 and the locking spline 200 are used to fluidically couple a second pipe at the second axial end 46, thereby establishing fluid connection between the pipe and the second pipe by the pipe coupling 10. As seen in Figures 3, 11 and 12, the pipe coupling 10 is optionally further provided with a pair of aperture covers 12, 14 for seated fluid sealing contact respectively over the apertures 52, 54 to prevent entry of, for example, dust and water, into the spline receiving channels after the pipe and the second pipe are fluidically coupled for operation.

To disengage the pipe from the first axial end 44, a removal tool, such as a metal hook, may be received into or through the hole 108 defined by the removal tab 106 of the locking spline 100 and a pulling force is applied to the removal tool, thereby removing the spline 100 from the spline receiving channel 304 and disengage the pipe from the first axial end 44.

As seen in Figure 2, the locking splines 100, 200 preferably dimensioned to include a length in a substantially rectangular cross section that is about three times greater than a width. It has been appreciated that the locking splines 100, 200 with a greater volume of material along the shear plane between the sleeve 40 and the pipes may advantageously improve shear resistance of the splines 100, 200, and therefore, improved resistance to burst pressures and a force induced by pipe contraction and/or expansion associated with fluctuations in external conditions, such as temperature changes.

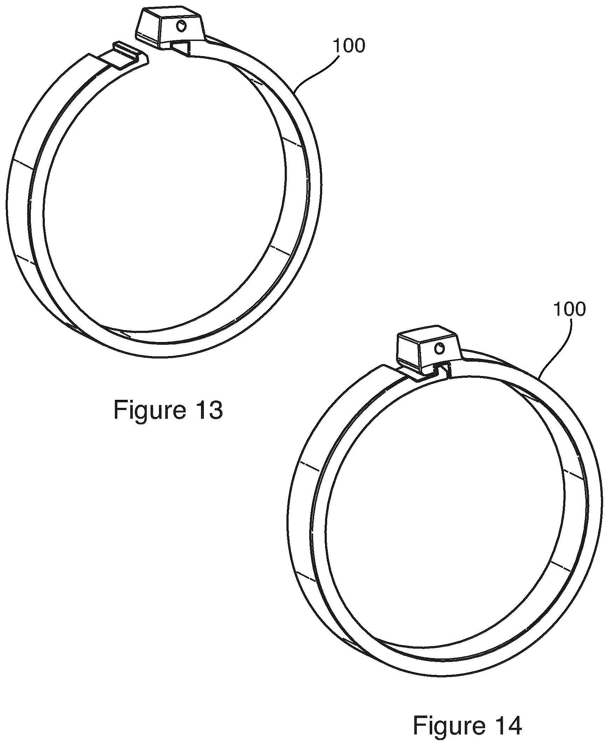

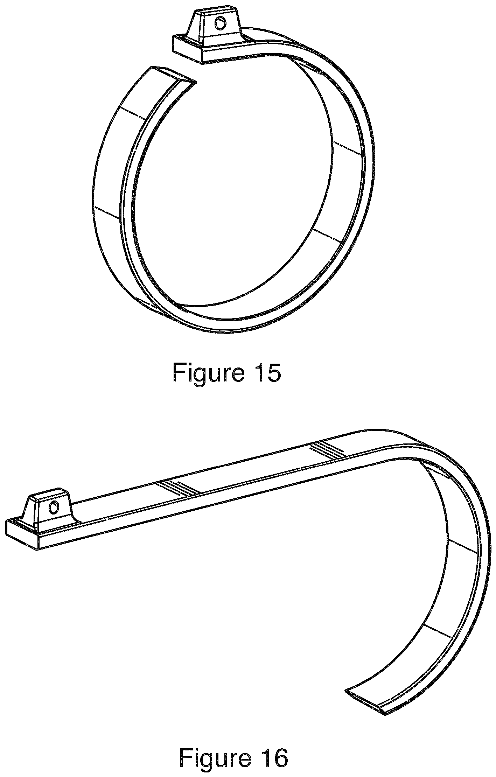

It is to be appreciated that the locking splines 100, 200 are preferably flexible and resiliently biased towards a resting position. In one embodiment, in the resting position, the locking splines 100, 200 are generally circular in shape (see Figure 13) or include a generally linear section combined with an arcuate or semicircular section (see Figures 15 and 16). The applicant has recognized that the locking spline as seen in Figure 13 with a generally circular shape in the resting position may permit reduced frictional resistance during insertion into the spline receiving channel, when, for example, compared to that is generally linear in the resting position. The embodiment seen in Figure 15 with linear terminal ends may permit easier insertion and removal of the locking spline, and that seen in Figure 16 with a semicircular section may permit easier molding or manufacturing of the locking spline. Furthermore, as seen in Figures 13 and 14, the terminal ends of the locking spline may be provided complementary interlocking end portions for removable engagement therebetween when the pipe is in the engaged position and to reduce unintended or inadvertent removal or misplacement of the locking spline.

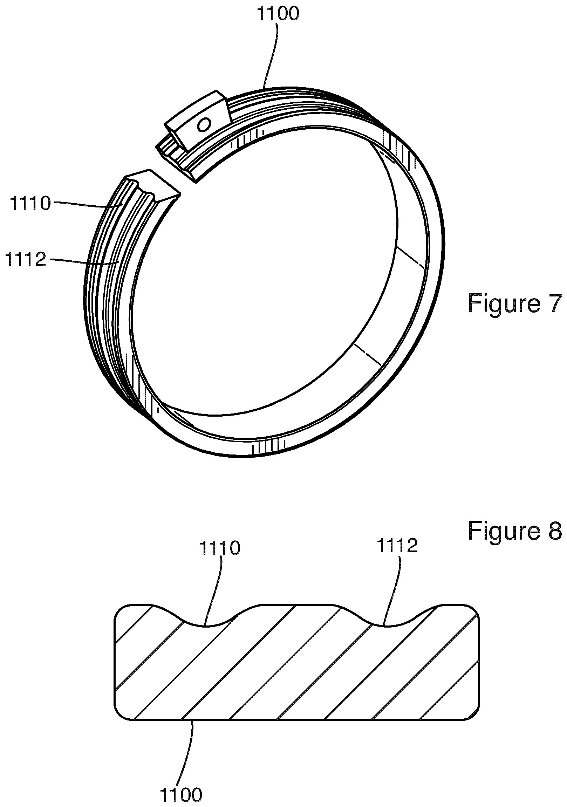

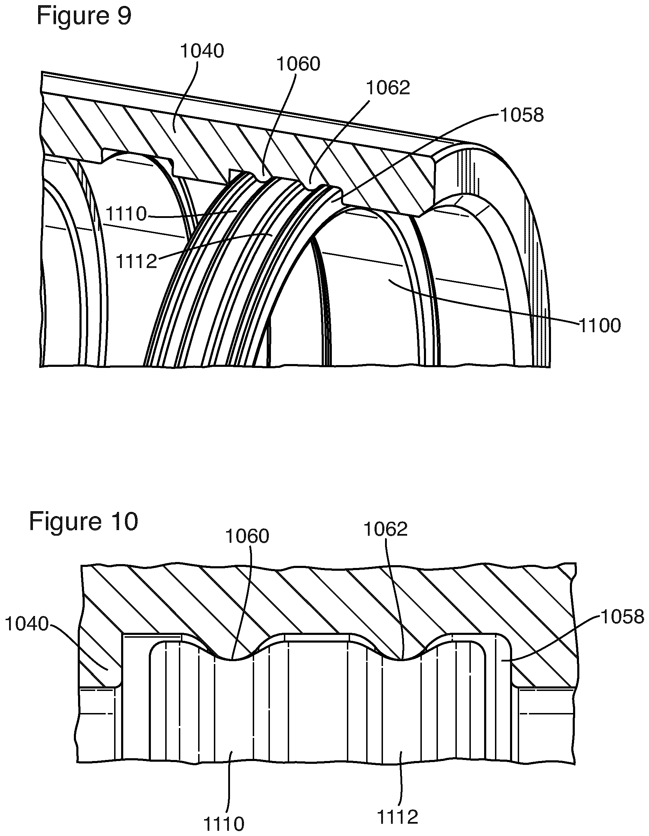

In another embodiment, to facilitate insertion and/or removal of the locking spline, the spline is modified for altered contact or engagement in the first spline receiving groove. Figures 7 and 8 show a locking spline 1100 of the embodiment, which is substantially identical to the locking spline 100, with the exception of a pair of substantially parallel trenches 1110, 1112 defined by the locking spline 1100 extending longitudinally along on an outer surface thereof. As seen in Figures 9 and 10, the trenches 1110, 1112 are sized to receive and abut a pair of annular protrusions 1060, 1062 extending inwardly from a first spline receiving groove 1058 defined by an elongate body or sleeve 1040, which is identical to the sleeve 40, with the exception of the annular protrusions 1060, 1062.

The locking spline 1100 and the sleeve 40 are for identical installation and operation as described above in respect of the pipe coupling 10. The applicant has appreciated that the trenches 1110, 1112 may permit operation to guide the locking spline 1100 along a pre-determined path defined with the annular protrusions 1060, 1062 in the insertion of the spline 110 between the pipe coupling and the pipe, thereby reducing resistance and/or friction during the insertion process. As better seen in Figure 10, the annular protrusions 1060, 1062 are provided with a smaller radius than the associated trenches 1110, 1112, so as to reduce contact between the spline 1110 and the 1040, thereby reducing frictional resistance therebetween and the effort required to insert the spline 1110.

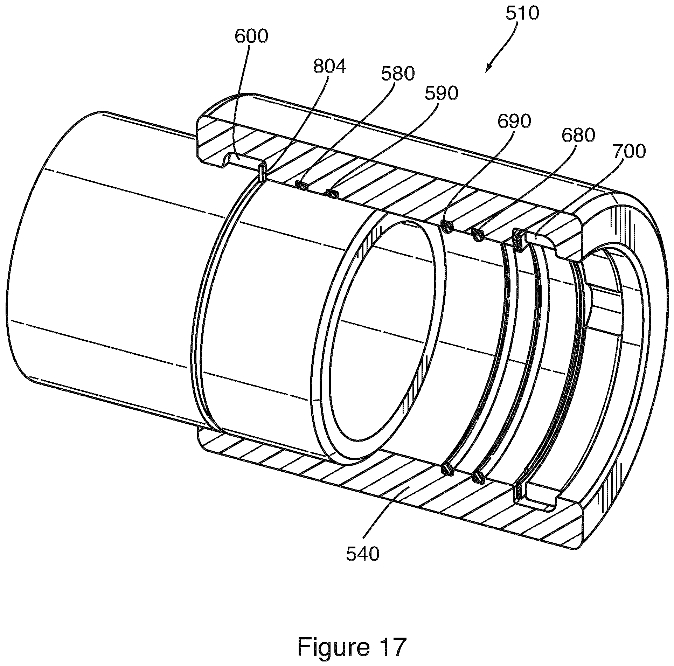

Reference is made to Figure 17 which shows a perspective view of a pipe coupling 510 for fluidically connecting two PVC, CPVC or ABS pipes, in accordance with another preferred embodiment of the present invention. In the construction shown, and as will be further described below, the pipe coupling 510 includes an elongate body or sleeve 540, an elastomeric O-rings 580, 590, 680, 690 and a pair of pipe engagement assemblies 600, 700 each having a pair of metal retainer rings 640, 650, 740, 750 and a filler ring 660, 760. As will be further explained below, the pipe engagement assemblies 600, 700 and the components thereof are identical to each other.

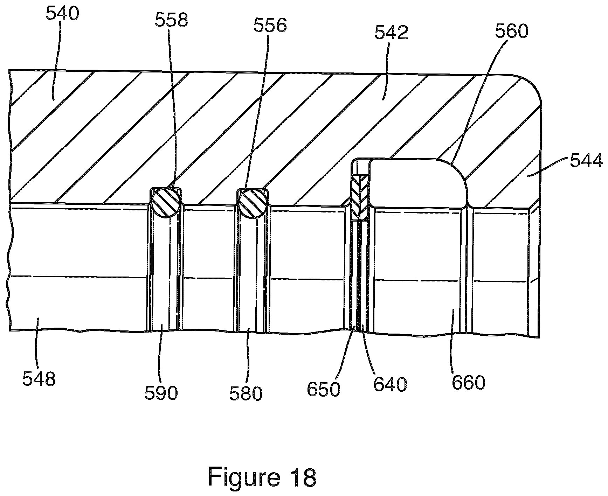

As seen in Figures 17 and 18, the sleeve 540 has a generally cylindrical shape formed with a sidewall 542 having opposed first and second axial ends 544, 546 and defining an internal bore 548 therebetween. As seen in Figure 17, the sleeve 540 from a midpoint towards the first axial end 544 forms a mirror image from the same towards the second axial end 546. Furthermore, as noted above, the pipe engagement assembly 600 is also identical to the assembly 700, with a difference therebetween being that the assembly 600 is for engagement with the first axial end 544, and the assembly 700 the second axial end 546. For a simpler and clearer understanding of the pipe coupling 510, the first axial end 544 and engagement of the assembly 600 thereto only will be described.

As seen in Figure 18, the sidewall 542 defines between the midpoint and the first axial end 544 three main portions, or namely, first and second O-ring receiving grooves 558, 556 and a first assembly receiving groove 560, in the order of increasing proximity towards the axial end 544.

As seen in Figures 17 to 19, the O-rings 580, 590 have a generally ring-like shape and is shaped and sized to be received respectively received in the O-ring receiving grooves 556, 558.

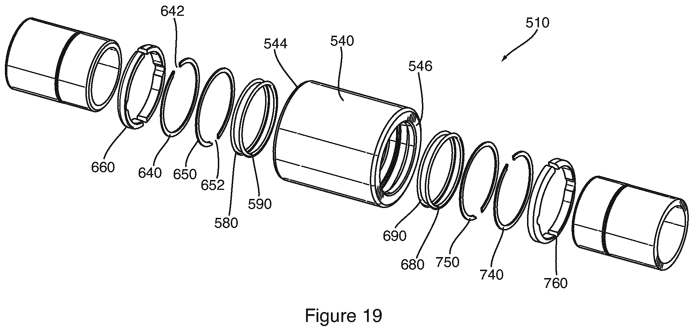

As seen in Figure 19, the metal retainer rings 640, 650 are flexible and define notches 642, 652 along circumferences thereof, thereby permitting radially inward contraction and radially outward expansion from an unexpanded state. The metal retainer rings 640, 650 are resiliently biased towards the unexpanded state, such that after radial contraction or expansion, the rings 640, 650 biased towards returning to the unexpanded state. As seen in Figure 18, an outer diameter of the metal retainer rings 640, 650 are smaller than a diameter of the internal bore 548, so as to permit radial insertion into the first assembly receiving groove 560. A diameter of the groove 560 is larger than an outer diameter of the metal retainer rings 640, 650, so as to permit outward expansion of the metal retainer rings 640, 650 into the groove 560 during insertion of the pipe therethrough, as will be further described below.

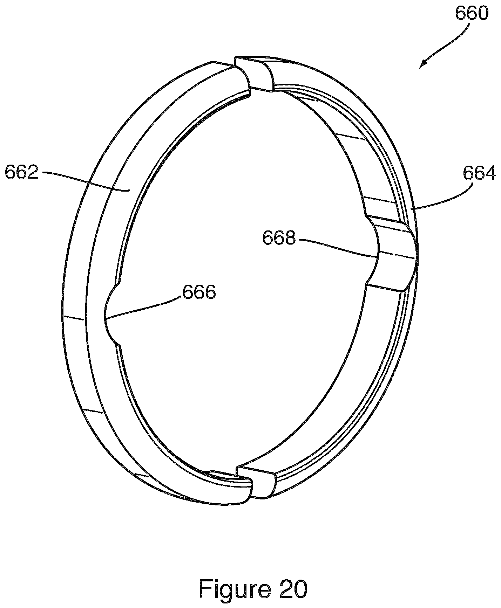

As seen in Figure 20, the filler ring 660 is formed with a pair of resiliently deformable semicircular filler ring sections 662, 664. The ring sections 662, 664 define inwardly open cutouts 666, 668 to facilitate insertion into the first assembly receiving groove 560, as will be further described below. As seen in Figure 18, the groove 560 has a width selected to receive the metal retainer rings 640, 650 and the filler ring 660 in the engagement of the pipe to the first axial end 544, as will be further described below.

For installation, the O-rings 580, 590 are inserted through the first axial end 544 to be received respectively in the O-ring receiving grooves 556, 558. The metal retainer rings 640, 650 are also inserted through the first axial end 544 to be received in the assembly receiving groove 560, together with the filler ring 660 therein. To facilitate insertion of the filler ring 660 into the groove 560, the filler ring sections 662, 664 may be bent inwardly respectively at the cutouts 666, 668 prior to insertion into the sleeve 540 and then stretched outwardly within the sleeve 540 to be placed into the groove 560. As seen in Figure 18, in the groove 560, the filler ring 660 is proximal to the first axial end 544 relative to the metal retainer rings 640, 650.

The pipe is then inserted into the internal bore 548 in fluid sealing contact with the O-rings 580, 590, where, as seen in Figures 17 and 19, the pipe defines an outwardly open second assembly receiving groove 802. As better seen in Figure 17, the second assembly receiving groove 802 is located for opposed alignment with the first assembly receiving groove 560 when the pipe is received in the sleeve 540 with a longitudinal end thereof is located about the midpoint of the sleeve 540, whereby the first and second grooves 560, 802 cooperatively define a ring receiving channel 804. It is to be appreciated that a width of the second groove 802 defined by the pipe is less than a width of the first groove 560, with the latter being sized to receive both the metal retainer rings 640, 650 and the filler ring 660 and the former the metal retainer rings 640, 650 only. With insertion of the pipe through the first axial end 544 and reaching the metal retainer rings 640, 650, the rings 640, 650 expand radially outwardly further into the first groove 560 to permit passage of the pipe therethrough, and when the first and second grooves 560, 802 are in the opposed alignment, the rings 640, 650 contract radially inwardly into the unexpanded state, so as to be received in the ring receiving channel 804, and thereby, engaging the pipe to the first axial end 544. The engagement with the pipe may coincide with an audible "click" of the rings 640, 650 when contracting into the second groove 802.

While the invention has been described with reference to preferred embodiments, the invention is not or intended by the applicant to be so limited. A person skilled in the art would readily recognize and incorporate various modifications, additional elements and/or different combinations of the described components consistent with the scope of the invention as described herein.

## Claims

1. A pipe fitting comprising a coupling body having two or more open ends and a locking spline for engagement of a pipe to the open end, the coupling body comprising a sidewall defining an internal bore sized for receiving at least a portion of the pipe, a first spline receiving groove inwardly open to receive at least a portion of the locking spline, and an aperture in communication with the first spline receiving groove,
wherein the first spline receiving groove is located proximal to the open end for opposed alignment with a second spline receiving groove defined by the pipe when the pipe is received in the internal bore in an engaged position, whereby the first and second spline receiving grooves cooperatively define a spline receiving channel, and the aperture is sized for receiving the locking spline therethrough to locate the locking spline in the spline receiving channel, thereby engaging the pipe to the open end.

2. The pipe fitting of claim 1, wherein the locking spline has a cross section provided with a length at least two times greater than a width, preferably the length is about three times greater than the width, wherein in the engaged position, the length is oriented along a longitudinal axis of the pipe and wherein preferably the cross section is a rectangular cross section, and the length is less than a width of the spline receiving channel.

3. The pipe fitting of any one of claims 1 to 2, wherein the locking spline comprises a curved section extending at least partially along a length thereof, the curved section being shaped to substantially conform to a curvature of the spline receiving channel.

4. The pipe fitting of any one of claims 1 to 3, wherein the locking spline defines first and second outwardly open spline grooves along a length thereof, and the coupling body comprises first and second ribs extending inwardly from the sidewall in the first spline receiving groove, the first and second ribs being located to be received respectively by the first and second spline grooves in the engaged position, wherein in the engaged position, the locking spline preferably contacts the first and second ribs substantially without contacting the sidewall.

5. The pipe fitting of any one of claims 1 to 4, wherein the coupling body further comprises a stop flange extending inwardly from the sidewall for abutting contact with a longitudinal end of the pipe in the engaged position, the sidewall further defining a gasket receiving groove interposed between the first spline receiving groove and the stop flange, wherein the pipe fitting further comprises a resiliently deformable gasket shaped to be received in the gasket receiving groove in fluid sealing contact with the pipe.

6. The pipe fitting of any one of claims 1 to 5, wherein the locking spline comprises a pair of opposed terminal ends shaped for removable complementary interlocking engagement therebetween in the engaged position, wherein preferably one said terminal end comprises a removal tab sized to extend outwardly into or through the aperture, the removal tab being configured to facilitate removal of the locking spline in disengagement of the pipe from the coupling body..

7. The pipe fitting of any one of claims 1 to 6, further comprising an aperture cover sized for seated sealing engagement over the aperture and prevent entry of dust or water into the spline receiving channel.

8. The pipe fitting of any one of claims 1 to 7, wherein the pipe comprises a chamfered insertion end shaped for reducing frictional resistance between the pipe and the coupling body during insertion of the pipe into the internal bore.

9. A pipe fitting comprising a coupling body having two or more open ends and a radially expandable retainer ring for engagement of a pipe to the open end, the retainer ring being resiliently biased towards an unexpanded state, and the coupling body comprising a sidewall defining an internal bore sized for receiving at least a portion of the pipe, and a first ring receiving groove inwardly open to receive at least a portion of the retainer ring,
wherein the first ring receiving groove is located proximal to the open end for opposed alignment with a second ring receiving groove defined by the pipe when the pipe is received in the internal bore in an engaged position, whereby the first and second ring receiving grooves cooperatively define a ring receiving channel, and the retainer ring is selected to radially expand outwardly into the first ring receiving groove with insertion of the pipe therethrough and return to the unexpanded state when the first and second ring receiving grooves are in the opposed alignment to locate the retainer ring in the ring receiving channel, thereby engaging the pipe to the open end.

10. The pipe fitting of claim 9, further comprising a filler ring, wherein the first ring receiving groove is sized to receive the retainer ring and the filler ring, the filler ring being for placement in the first ring receiving groove distal to a longitudinal end of the pipe in the engaged position relative to the retainer ring, and the second ring receiving groove being narrower in width than the first ring receiving groove, whereby the second ring receiving groove and a longitudinal section of the first ring receiving groove located for receiving the retainer ring cooperatively define the ring receiving channel.

11. The pipe fitting of claim 10, wherein the filler ring comprises a resiliently deformable filler ring formed with a plurality of filler ring arc sections and wherein the plurality of filler ring arc sections preferably comprises a pair of substantially semicircular filler ring arc sections.

12. The pipe fitting of any one of claims 9 to 11, wherein the pipe comprises a chamfered insertion end shaped for reducing frictional resistance between the pipe and the coupling body during insertion of the pipe into the internal bore.

13. The pipe fitting of any one of claims 9 to 12, wherein the pipe fitting comprises two said retainer rings, each said retainer ring comprising a split ring or a metal split ring defining a gap along a circumference thereof, wherein in the engaged position, said two retainer rings are for placement in the ring receiving channel with the respective gaps offset from each other along a longitudinal axis of the pipe.

14. The pipe fitting of any one of claims 9 to 13, wherein the coupling body further defines at least a gasket receiving groove interposed between the first ring receiving groove and a longitudinal end of the pipe in the engaged position, the pipe fitting further comprising at least a resiliently deformable gasket shaped to be received in the gasket receiving groove in fluid sealing contact with the pipe, the gaskets comprising preferably O-rings.
